# EUROPEAN PATENT SPECIFICATION

(11) **EP 1 390 652 B1**
(45) Date of publication and mention of the grant of the patent: **10.08.2005**
(21) Application number: 02722442.7
(22) Date of filing: 22.04.2002
(51) Int. Cl.: F16L 3/14

(54) **MOUNTING ASSEMBLIES**
BEFESTIGUNGSANORDNUNGEN
ENSEMBLES DE MONTAGE

(30) Priority: 20.04.2001 GB 0109713
(43) Date of publication of application: 25.02.2004
(73) Proprietor: Barton, Peter Clarence, Wednesbury, West Midlands WS10 0BU (GB); Barton, Stephen Paul, Wednesbury, West Midlands WS10 0BU (GB)
(72) Inventor: Barton, Peter Clarence, Wednesbury, West Midlands WS10 0BU (GB); Barton, Stephen Paul, Wednesbury, West Midlands WS10 0BU (GB)
(74) Representative: Parnham, Kevin
(86) International application number: PCT/GB2002/001817
(87) International publication number: WO 2002/086368

(56) References cited:
- EP-A- 0 223 298
- DE-A- 4 108 432
- DE-A- 10 041 223
- DE-U- 8 527 403
- GB-A- 1 514 887
- GB-A- 2 320 077
- US-A- 702 704
- US-A- 705 971

## Description

The present invention concerns mounting assemblies, and particularly but not exclusively such assemblies for mounting objects such as conduits to a fixture.

Often conduits such as piping, cables and the like are attached to fixtures such as walls, ceilings and other fixed members to be held from presenting an obstruction and to mitigate problems of damage to the conduit. In industrial environments, such as factories and the like, conduits such as power, heating, plumbing and lighting are often routed up to and across the ceiling or roof, attached by clips to ceiling or roofing members where they are relatively safe from accidental damage and present no obstruction or hazard to any workers or equipment therebelow. Further, sprinkler and other fire safety systems usually comprise pipework which is suspended by attachment from the ceiling or supporting structure of a factory or building.

A known design of clip used to effect such attachment comprises a looped strap of metal in each end of which is formed a hole. The holes are passed over a threaded bar attached to the fixture, and cooperable nuts on either side of the strip are moved together to clamp the ends of the strap therebetween whereby to define a closed loop around the conduit.

With these known designs of clip, the strap must be located around the conduits to be fixed thereby, and then lifted until the holes align, the threaded bar located through the holes and then the second locking nut located on the threaded bar and tightened, all whilst the conduits are held in the loop, usually at an elevated height within the factory. It will be appreciated therefore that such known designs of clip suffer from several disadvantages. Holding the length(s) of conduit(s) whilst manually manipulating a nut to engage it on the end of a threaded bar is difficult, time consuming and dangerous, particularly at elevated heights. There is also a tendency for a worker to drop the nut and such operations usually require two persons to assist each other.

GB 1514887 (Flamco BV) represents the most relevant state of the art and illustrates a mounting assembly in which a conduit is supported to allow adjustability upon assembly but with ends to the supporting elongate member upturned and so subject to slip release upon high loadings.

DE4108432 (Hilti) shows a conduit support mounting but utilising hooked ends and so providing reduced adjustability.

DE8527403 (Flamco) shows use of sprung ends to a support elongate member retained by a sleeve but again with limited adjustability and limited resistance to slip release.

The invention provides a mounting assembly as defined in claim 1.

Preferred embodiments of the invention are outlined in the dependent claims.

Embodiments of the present invention will now be described by way of example only and with reference to the accompanying drawings, in which:-
Fig. 1 is a diagrammatic view of a first mounting assembly according to the invention;
Fig. 2 is an exploded view of the assembly of Fig. 1;
Figs. 3 and 4 are similar views to Figs. 1 and 2 respectively of a second mounting assembly according to the invention; and
Fig. 5 is a part schematic view of an alternative mounting assembly.

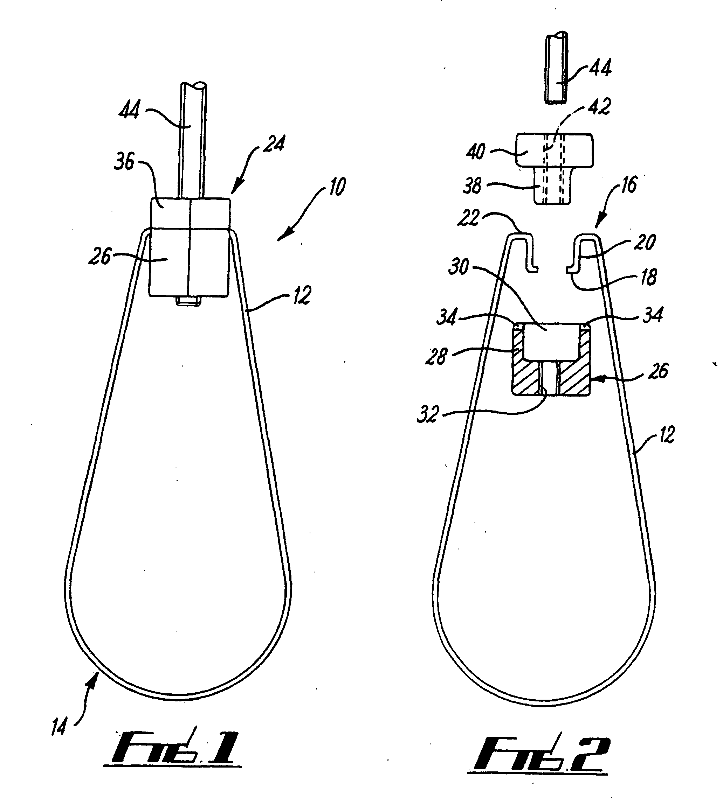

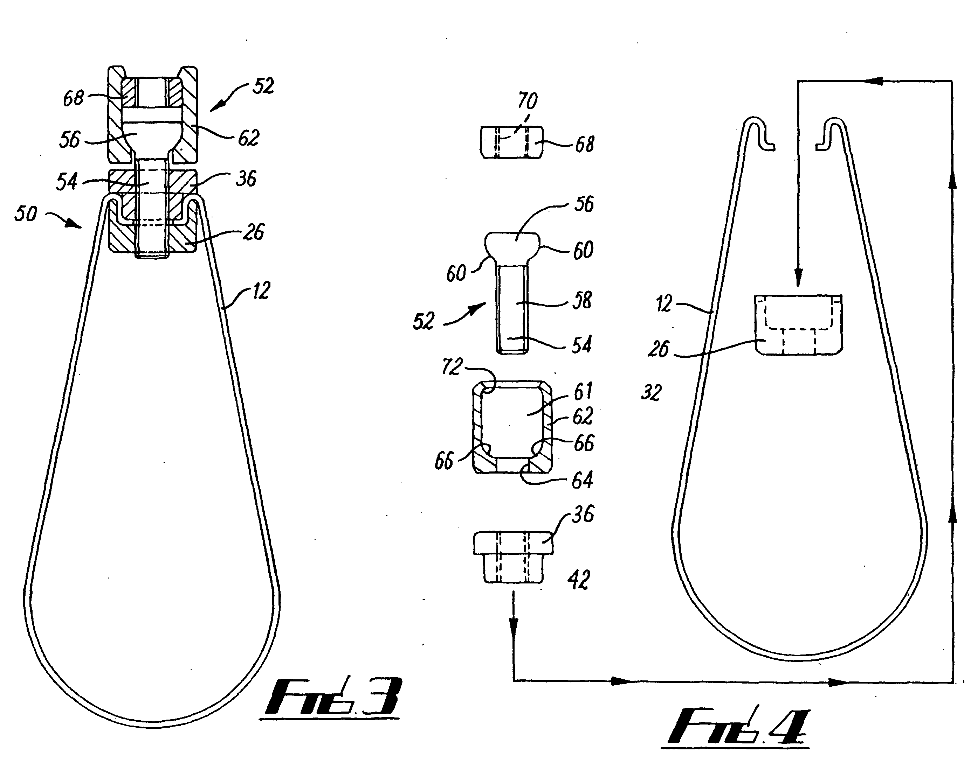

Figs. 1 and 2 show a mounting assembly 10 suitable for mounting conduits such as piping, or cables and the like to a wall, ceiling or other fixture. The assembly 10 comprises an elongate member 12 which in use forms a loop 14 through which the conduits can extend and be supported by. The member 12 is shaped as shown in Fig. 2.

The member 12 extends in a loop from two identical ends 16. The ends 16 comprise an inwardly turned end part 18 from which a first section 20 extends substantially at a right angle (vertically in the drawings). A second section 22 is perpendicular to the first section 20, extending away from the end part 18. The remainder of the loop 14 extends in a generally horseshoe type shape.

In use the ends 16 of the loop 14 are locatable in a mounting bracket 24. The bracket 24 comprises a first part 26 with a body 28 defining a cylindrical cavity 30 for approximately half of the depth of the body 28. A concentric smaller diameter threaded passage 32 extends from the cavity 30 to the remainder of the body 28. A pair of diametrically opposed aligned slots 34 are provided in the top surface of the first part 26 either side of the cavity 30.

The bracket 24 also comprises a second part 36. The part 36 comprises a body part 38 which is locatable in the cavity 30, and a head part 40 of greater diameter which is locatable against the upper surface of the second part 36. A threaded passage 42 extends through the body and head parts 38, 40, and is of a similar size and thread to the passage 32.

Figs. 1 and 2 illustrate a threaded drop rod 44 of the type commonly installed in buildings for use in supporting conduits etc. The rod 44 is threadedly engageable in the passages 32, 42. To put together the assembly 10, the resilient elongate member 12 is strained if necessary, and the ends 16 are located in the cavity 30. The body part 38 of the second part 36 is inserted into the cavity 30 to retain the ends 16 therein. The rod 44 is then screwed into the passages 32, 42 to mount the assembly 10 and also to retain the first and second parts 26, 36 together, clamping the ends 16 therebetween. The bottom surface of the body part 38 engages against the end parts 18 and also the member 12. Engagement of the second sections 22 in the slots 34 prevents the first part 26 rotating relative to the loop 14.

There is thus described a mounting assembly with an advantageous configuration which can readily be assembled and positioned as required.

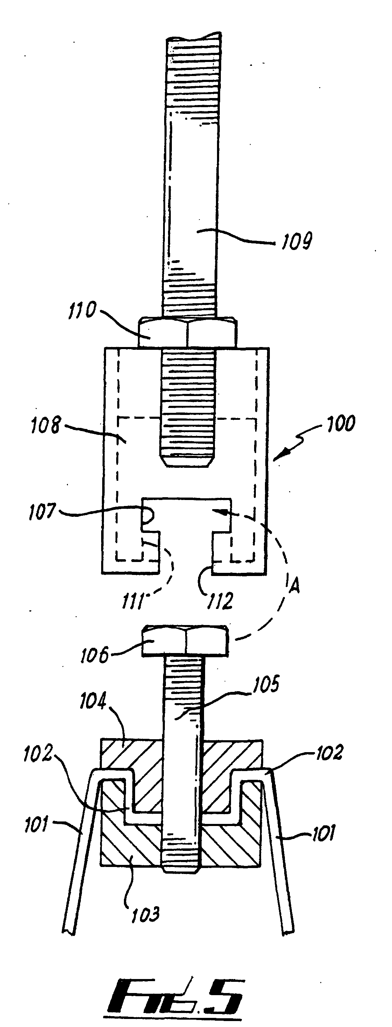

Figs. 3 and 4 show a further mounting assembly 50 which is similar in many respects to the assembly 10 and only the differences will be described in detail. The same reference numerals will be used for the same or similar parts. The elongate member 12 and the first and second parts 26, 36 of the mounting bracket 24 are essentially similar. However, rather than mounting directly onto a drop rod as described above, a further mounting arrangement 52 is provided which permits adjustment of the alignment of the loop 14.

The arrangement 52 comprises a threaded pin 54 engageable in the passages 32, 34 in a similar manner to the drop rod described above. The pin 54 has an enlarged head 56 with curved surfaces 60 extending from the underside of head 56 to the shaft 58 of the pin 54. The pin head 56 is restrainably located in a cavity 61 within a body 62.

The body 62 has a generally cylindrical configuration and has a lower smaller diameter opening 64 through which the shaft 58 of the pin 54 is extendible, to place the head 56 in the cavity 63. The cavity 63 widens from the opening 64, and is defined on the inside of the body by curved surfaces 66 which are cooperable with the curved surfaces 60 on the pin head 56. Both curved surfaces are preferably part-spherical. The head 56 and surfaces 66 thus form a ball-and-socket joint A plug 68 with a threaded passage 70 extending therethrough closes the cavity 63 from above and is retained therein by the tuned over upper edge 72 of the body 62. The plug 68 is located in the body after locating the pin head 56 therein during fabrication.

In use, the passage 70 is threaded onto a drop rod to support the mounting arrangement 52 and thereby support the loop member 12.

The assembly 50 provides additional advantages in comparison with the assembly 10, as follows. The assembly 50 may be pre-assembled to the condition illustrated in Fig. 3. This ensures correct assembly is achieved, which may be difficult to achieve on site. Attachment to a drop rod is a simple matter of threading the arrangement 52 onto the rod, so that this operation is quicker, and thus more economic. In addition, the ball-and-socket co-operation between the pin 54 and cavity 51 allow the fitter to accommodate misalignment of the drop rod without difficult, thus further improving the speed of fitting.

Fig. 5 illustrates an alternative mounting assembly 100 in accordance with the present invention. The assembly 100 comprises an elongate member 101 which is again formed and trapped as a loop with its ends 102 secured between respective mounting parts 103,104 held together through a screw thread 105 of a bolt with an hexagonal head 106.

The head 106 is manipulated in the direction of arrowhead A such that it enters a keyhole entry 107 in a body 108 suspended upon an elongate suspension member 109 such as a drop rod. The elongate member 109 penetrates and is displaceable upon the screw thread into the body 108 with a locking nut 110 securing the elongate member 109 at a desired position. Once the head 106 has entered the body 108 through the entry 107 the head is allowed to fall into a well 111 centrally within the body 108. The head 106 is then trapped in the body 108 by displacement of the elongate member 109 downwardly and above the well 111 such that the head 106 cannot lift up and so pass out through the entry 107. Typically, the head 106 will be allowed to move within the well 111 such that there is adjustment thereabout and in order therefore to allow for slight misalignment in the elongate member 101 which supports piping or cables etc.

By allowing the head 106 to be assembled into the assembly 100 as described with regard to Fig. 5, it will be appreciated that the elongate 101 in its loop configuration with parts 103, 104 along with the bolt incorporating the head 106 can be secured about piping or cables and, then the head manipulated as described previously through the entry 107 into the well 111 and the elongate member 109 displaced downwardly and above the well 111 to prevent removal of the head 106. In such circumstances, formation of the assembly 100 is rendered relatively easy and more convenient. Typically, the elongate members 109 in the form of drop rods along with associated body 108 can be secured at spaced positions in a ceiling or roof. The elongate member 101 along with parts 103, 104 and the bolt incorporating the head 106 can then be secured about the piping or cabling at ground level. With the respective halves of the assembly 100 thereby prepared, the piping or cabling can then be lifted to the desired approximate position and the head 106 in each assembly 100 secured as described.

Normally the head 106 will be hexagonal for convenience in locating the screw thread 105 to secure the parts 103, 104 together in formation of the loop from elongate member 101. Normally, the well 111 in the body 108 will be round with a bottom aperture 112 substantially the same as the approximate diameter of the thread 105 such that the head is captured between that aperture 112 and the appropriately located elongate member 109 such that the head 106 is at least initially loosely trapped to allow adjustment for misalignment of supported piping or cabling. However, eventually the elongate member 109 can be further displaced into direct engagement and contact with the head 106 to essentially lock the assembly 100 into a fixed configuration.

## Claims

1. A mounting assembly, the assembly comprising a resilient elongate member (12), and a mounting bracket (24) for holding the two ends (16) of the resilient elongate member (12) such that the member (12) defines a loop in which articles can be supported, the mounting bracket (24) comprising a first member (26) in which the ends (16) of the elongate member (12) are locatable in a cavity (30) and a second member (36) extendible into the first member (26) to hold the said ends (16) therein, **characterised in that** the said ends (16) have a second section (22) to lye upon a top edge of the first member (26) about the cavity (30), a first section (20) to engage a side of the cavity (30) and a turned end part (18) extending in the cavity (30) in a stepped arrangement to be trapped by the second member (36).

2. A mounting assembly as claimed in claim 1, wherein a support member (44) is provided extending from the mounting bracket to permit mounting of the assembly to a fixture, the support member comprising a head (56) spaced from the elongate member, which head is movably trapped within a body (62) such that the support member is supported by the body and extends therefrom, but the alignment therebetween can be varied.

3. A mounting assembly according to claim 2, in which the body and support member head have cooperable surfaces (6o).

4. A mounting assembly according to claim 3, in which the surfaces are curved.

5. A mounting assembly according to claim 4, in which the surfaces are part spherical.

6. A mounting assembly according to claim 1, in which the body comprises a plug (68) locatable within the body once the support member head has been located therein, to retain the head in the body.

7. A mounting assembly according to claim 6, in which the ends of the elongate member are bent relative to the remainder of the member.

8. A mounting assembly according to claim 7, in which the immediate ends (18, 20) of the elongate member are turned through a substantial right-angle such that the second member of the mounting bracket is engageable with the immediate ends to retain the immediate ends in the first member.

9. A mounting assembly according to claim 8, in which the elongate member comprises the first section (20) extending from the immediate ends and engageable generally against inner walls of the cavity.

10. A mounting assembly according to claim 9, in which the elongate member comprises the second section (22) engageable across an upper part (34) of the first member.

11. A mounting assembly according to claim 10, in which the or each second section is engageable in a formation or formations in said upper part so as to prevent rotation relative to the first member.

12. A mounting assembly according to claim 6, in which the first member comprises the cavity (30) in which the ends of the elongate member are locatable and in which a part of the second member is locatable.

13. A mounting assembly according to claim 12, in which a threaded passage (32) extends from said cavity.

14. A mounting assembly according to claim 13, in which the threaded passage is coaxial with said cavity and of a smaller diameter.

15. A mounting assembly according to claim 12, in which the second member comprises a body part (38) locatable in the cavity of the first member and engageable against the ends of the elongate member.

16. A mounting assembly according to claim 15, in which the second member comprises a head part (40) of greater diameter than the body part, and locatable against said upper part of the first member.

17. A mounting assembly according to claim 16, in which a threaded passage (42) extends through the head and body parts of the second member.

18. A mounting assembly according to claim 17, in which a threaded passage (32) extends through the first member.

19. A mounting assembly according to claim 18, in which the threaded passage (42) extending through the second member is of the same diameter as the threaded passage (32) extending through the first member.

20. A mounting assembly according to claim 18 and 19, in which the support member comprises an elongate threaded member (44) which, in use, extends through the threaded passages (32, 42) to hold the first and second members together.

21. A mounting assembly according to any preceding claim, in which the elongate member is resilient such that it has to be strained to locate the ends thereof in the mounting bracket.

22. A mounting assembly according to claim 21, in which, in a relaxed condition, the ends of the resilient elongate member are spaced further apart than when located in the mounting bracket.

23. A mounting assembly as claimed in claim 2 and any claim dependent thereon, in which the body includes a keyhole entry through which the head may pass and which leads to a well within the body in which the head is trapped.

24. A mounting assembly as claimed in claim 23, in which the head is trapped by an elongate suspension member displaceable above the well to prevent removal of the head from the well.

25. A mounting assembly as claimed in claim 2 and any claim dependent thereon, in which the head is an hexagonal nut head of a bolt secured in the assembly.

## Patentansprüche

1. Befestigungsanordnung, welche ein elastisches längliches Glied (12) und eine Befestigungsklammer (24) zum Halten der beiden Enden (16) des elastischen länglichen Glieds (12) aufweist, wobei das Glied (12) eine Schleife bildet, in welcher Gegenstände gehalten werden können, wobei die Befestigungsklammer (24) ein erstes Glied (26) aufweist, in welchem die Enden (16) des länglichen Glieds (12) in einem Hohlraum (30) anbringbar sind, und ein zweites Glied (36) aufweist, das in das erste Glied (26) ausdehnbar ist, um die Enden (16) darin zu halten, **dadurch gekennzeichnet, dass** die Enden (16) einen zweiten Abschnitt (22) haben, der auf einer Oberkante des ersten Gliedes (26) um den Hohlraum (30) herum aufliegt, sowie einen ersten Abschnitt (20) für den Eingriff mit einer Seite des Hohlraums (30) und einen gebogenen Endteil (18) haben, der sich in dem Hohlraum (30) in einer Stufenanordnung erstreckt, um durch das zweite Glied (36) eingeschlossen gehalten zu werden.

2. Befestigungsanordnung nach Anspruch 1, **dadurch gekennzeichnet, dass** ein Stützglied (44) vorgesehen ist, das sich von der Befestigungsklammer erstreckt, um die Befestigung der Anordnung an einer Halterung zu ermöglichen, wobei das Stützglied einen von dem länglichen Glied beabstandeten Kopf (56) aufweist, der innerhalb eines Körpers (62) beweglich eingeschlossen gehalten ist, so dass das Stützglied durch den Körper abgestützt wird und sich von ihm erstreckt, wobei jedoch die Ausrichtung dazwischen verändert werden kann.

3. Befestigungsanordnung nach Anspruch 2, **dadurch gekennzeichnet, dass** der Körper und der Stützglied-Kopf zusammenwirkbare Oberflächen (60) haben.

4. Befestigungsanordnung nach Anspruch 3, **dadurch gekennzeichnet, dass** die Oberflächen gekrümmt sind.

5. Befestigungsanordnung nach Anspruch 4, **dadurch gekennzeichnet, dass** die Oberflächen teilweise sphärisch sind.

6. Befestigungsanordnung nach Anspruch 1, **dadurch gekennzeichnet, dass** der Körper einen Stöpsel (68) aufweist, der innerhalb des Körpers anbringbar bzw. anordenbar ist, sobald der Stützglied-Kopf darin angeordnet worden ist, um den Kopf in dem Körper zu halten.

7. Befestigungsanordnung nach Anspruch 6, **dadurch gekennzeichnet, dass** die Enden der länglichen Glieder bezüglich des Rests des Gliedes gebogen sind.

8. Befestigungsanordnung nach Anspruch 7, **dadurch gekennzeichnet, dass** die unmittelbaren Enden (18, 20) des länglichen Gliedes um einen im Wesentlichen rechten Winkel gebogen sind, so dass das zweite Glied der Befestigungsklammer mit den unmittelbaren Enden in Eingriff bringbar ist, um die unmittelbaren Enden in dem ersten Glied zu halten.

9. Befestigungsanordnung nach Anspruch 8, **dadurch gekennzeichnet, dass** das längliche Glied den ersten Abschnitt (20) aufweist, der sich von den unmittelbaren Enden erstreckt und im Allgemeinen gegen die inneren Wände des Hohlraums in Eingriff gebracht werden kann.

10. Befestigungsanordnung nach Anspruch 9, **dadurch gekennzeichnet, dass** das längliche Glied den zweiten Abschnitt (22) aufweist, der über einen oberen Teil (24) des ersten Glieds in Eingriff gebracht werden kann.

11. Befestigungsanordnung nach Anspruch 10, **dadurch gekennzeichnet, dass** der oder jeder zweite Abschnitt in einer Formation oder in Formationen in dem oberen Teil in Eingriff gebracht werden kann, um eine Drehung bezüglich des ersten Gliedes zu verhindern.

12. Befestigungsanordnung nach Anspruch 6, **dadurch gekennzeichnet, dass** das erste Glied den Hohlraum (30) aufweist, in welchem die Enden des länglichen Glieds anbringbar bzw. anordenbar sind und in welchem ein Teil des zweiten Glieds anbringbar bzw. anordenbar ist.

13. Befestigungsanordnung nach Anspruch 12, **dadurch gekennzeichnet, dass** ein mit einem Gewinde versehener Durchtritt (32) sich von dem Hohlraum erstreckt.

14. Befestigungsanordnung nach Anspruch 13, **dadurch gekennzeichnet, dass** der mit einem Gewinde versehene Durchtritt koaxial zu dem Hohlraum ist und einen kleineren Durchmesser hat.

15. Befestigungsanordnung nach Anspruch 12, **dadurch gekennzeichnet, dass** das zweite Glied einen Körperteil (38) aufweist, der in dem Hohlraum des ersten Gliedes anbringbar bzw. anordenbar ist und an den Enden des länglichen Glieds in Eingriff gebracht werden kann.

16. Befestigungsanordnung nach Anspruch 15, **dadurch gekennzeichnet, dass** das zweite Glied einen Kopfteil (40) mit größerem Durchmesser als der Körperteil aufweist und gegen den oberen Teil des ersten Gliedes hin anordenbar ist.

17. Befestigungsanordnung nach Anspruch 16, **dadurch gekennzeichnet, dass** ein mit einem Gewinde versehener Durchtritt (42) sich durch das Kopfteil und das Körperteil des zweiten Gliedes hindurch erstreckt.

18. Befestigungsanordnung nach Anspruch 17, **dadurch gekennzeichnet, dass** ein mit einem Gewinde versehener Durchtritt (32) sich durch das erste Glied hindurch erstreckt.

19. Befestigungsanordnung nach Anspruch 18, **dadurch gekennzeichnet, dass** der mit einem Gewinde versehene Durchtritt (42), der sich durch das zweite Glied hindurch erstreckt, denselben Durchmesser wie der mit einem Gewinde versehene Durchtritt (32) hat, der sich durch das erste Glied hindurch erstreckt.

20. Befestigungsanordnung nach Anspruch 18 und 19, **dadurch gekennzeichnet, dass** das Stützglied ein längliches Gewindeglied (44) aufweist, das sich im Betrieb durch die mit einem Gewinde versehenen Durchtritte (32, 42) hindurch erstreckt, um das erste und das zweite Glied zusammenzuhalten.

21. Befestigungsanordnung nach einem der vorhergehenden Ansprüche, **dadurch gekennzeichnet, dass** das längliche. Glied elastisch bzw. federnd ist, so dass es gedehnt werden muss, um seine Enden in der Befestigungsklammer anzuordnen.

22. Befestigungsanordnung nach Anspruch 21, **dadurch gekennzeichnet, dass** im entspannten Zustand die Enden des elastischen länglichen Glieds weiter voneinander beabstandet sind als wenn sie in der Befestigungsklammer angeordnet sind.

23. Befestigungsanordnung nach Anspruch 2 und jedem davon abhängigen Anspruch, **dadurch gekennzeichnet, dass** der Körper einen Schlüsselloch-Eintritt enthält, durch den der Kopf hindurchtreten kann und der zu einer Kavität innerhalb des Körpers führt, in welcher der Kopf eingeschlossen gehalten ist.

24. Befestigungsanordnung nach Anspruch 23, **dadurch gekennzeichnet, dass** der Kopf durch ein längliches Aufhängungsglied eingeschlossen gehalten wird, das oberhalb der Kavität verschiebbar ist, um ein Entfernen des Kopfes aus der Kavität zu verhindern.

25. Befestigungsanordnung nach Anspruch 2 und jedem davon abhängigen Anspruch, **dadurch gekennzeichnet, dass** der Kopf ein Sechskantmutter-Kopf einer in der Anordnung befestigten Schraube bzw. eines Bolzens ist.

## Revendications

1. Ensemble de montage, l'ensemble comprenant un élément allongé élastique (12) et un support de montage (24) pour maintenir les deux extrémités (16) de l'élément allongé élastique (12) de sorte que l'élément (12) définit une boucle dans laquelle des articles peuvent être supportés, le support de montage (24) comprenant un premier élément (26) dans lequel les extrémités (16) de l'élément allongé (12) peuvent être situées dans une cavité (30) et un second élément (36) extensible dans le premier élément (26) pour maintenir lesdites extrémités (16) à l'intérieur de celui-ci, **caractérisé en ce que** lesdites extrémités (16) ont une seconde section (22) pour se trouver sur un bord supérieur du premier élément (26) au voisinage de la cavité (30), une première section (20) destinée à venir en prise avec un côté de la cavité (30) et une partie d'extrémité retournée (18) s'étendant dans la cavité (30) selon un agencement étagé pour être coincé par le second élément (36).

2. Ensemble de montage selon la revendication 1, dans lequel on prévoit un élément de support (44) s'étendant à partir du support de montage pour permettre le montage de l'ensemble sur une partie fixe, l'élément de support comprenant une tête (56) espacée de l'élément allongé, laquelle tête est coincée de manière mobile dans un corps (62), de sorte que l'élément de support est supporté par le corps et s'étend à partir de celui-ci, mais l'alignement entre eux peut être modifié.

3. Ensemble de montage selon la revendication 2, dans lequel le corps et la tête de l'élément de montage ont des surfaces (60) pouvant coopérer.

4. Ensemble de montage selon la revendication 3, dans lequel les surfaces sont incurvées.

5. Ensemble de montage selon la revendication 4, dans lequel les surfaces sont partiellement sphériques.

6. Ensemble de montage selon la revendication 1, dans lequel le corps comprend un bouchon (68) pouvant être situé dans le corps une fois que la tête de l'élément de support a été positionnée à l'intérieur de celui-ci, pour retenir la tête dans le corps.

7. Ensemble de montage selon la revendication 6, dans lequel les extrémités de l'élément allongé sont courbées par rapport au reste de l'élément.

8. Ensemble de montage selon la revendication 7, dans lequel les extrémités intermédiaires (18, 20) de l'élément allongé sont retournées selon un angle sensiblement droit de sorte que le second élément du support de montage peut être mis en prise avec les extrémités intermédiaires pour retenir les extrémités intermédiaires dans le premier élément.

9. Ensemble de montage selon la revendication 8, dans lequel l'élément allongé comprend la première section (20) s'étendant à partir des extrémités intermédiaires et pouvant être généralement mise en prise contre les parois internes de la cavité.

10. Ensemble de montage selon la revendication 9, dans lequel l'élément allongé comprend la seconde section (22) pouvant être mise en prise sur une partie supérieure (34) du premier élément.

11. Ensemble de montage selon la revendication 10, dans lequel la ou chaque seconde section peut être mise en prise dans une formation ou des formations dans ladite partie supérieure afin d'empêcher la rotation par rapport au premier élément.

12. Ensemble de montage selon la revendication 6, dans lequel le premier élément comprend la cavité (30) dans laquelle les extrémités de l'élément allongé peuvent être positionnées et dans laquelle une partie du second élément peut être positionnée.

13. Ensemble de montage selon la revendication 12, dans lequel un passage fileté (32) s'étend à partir de ladite cavité.

14. Ensemble de montage selon la revendication 13, dans lequel le passage fileté est coaxial avec ladite cavité et a un diamètre inférieur.

15. Ensemble de montage selon la revendication 12, dans lequel le second élément comprend une partie de corps (38) pouvant être positionnée dans la cavité du premier élément et pouvant être mise en prise contre les extrémités de l'élément allongé.

16. Ensemble de montage selon la revendication 15, dans lequel le second élément comprend une partie de tête (40) de plus grand diamètre que la partie de corps, et pouvant être positionnée contre ladite partie supérieure du premier élément.

17. Ensemble de montage selon la revendication 16, dans lequel un passage fileté (42) s'étend à travers les parties de tête et de corps du second élément.

18. Ensemble de montage selon la revendication 17, dans lequel un passage fileté (32) s'étend à travers le premier élément.

19. Ensemble de montage selon la revendication 18, dans lequel le passage fileté (42) s'étendant à travers le second élément a le même diamètre que le passage fileté (32) s'étendant à travers le premier élément.

20. Ensemble de montage selon les revendications 18 et 19, dans lequel l'élément de support comprend un élément fileté allongé (44) qui, à l'usage, s'étend à travers les passages filetés (32, 42) pour maintenir les premier et second éléments ensemble.

21. Ensemble de montage selon l'une quelconque des revendications précédentes, dans lequel l'élément allongé est élastique de sorte qu'il doit être tendu pour positionner ses extrémités dans le support de montage.

22. Ensemble de montage selon la revendication 21, dans lequel, dans un état au repos, les extrémités de l'élément allongé élastique sont davantage espacées que du moment où elles sont positionnées dans le support de montage.

23. Ensemble de montage selon la revendication 2 et l'une quelconque des revendications dépendantes de celle-ci, dans lequel le corps comprend une entrée de clé à travers laquelle la tête peut passer et qui conduit à un puits situé à l'intérieur du corps dans lequel la tête est coincée.

24. Ensemble de montage selon la revendication 23, dans lequel la tête est coincée par un élément de suspension allongé déplaçable au dessus du puits pour empêcher le retrait de la tête du puits.

25. Ensemble de montage selon la revendication 2 et l'une quelconque des revendications dépendantes de celle-ci, dans lequel la tête est une tête d'écrou hexagonal d'un boulon fixé dans l'ensemble.
